(19)

Europäisches Patentamt
European Patent Office
Office européen des brevets

(11)  **EP 4 318 724 B1**

(12)  **EUROPEAN PATENT SPECIFICATION**

(45)  Date of publication and mention
of the grant of the patent:
**27.05.2026  Bulletin 2026/22**

(21)  Application number: **22936039.1**

(22)  Date of filing: **08.04.2022**

(51)  International Patent Classification (IPC):
*B65H 45/101* (2006.01)   *H01M 10/0585* (2010.01)
*B65H 31/10* (2006.01)   *B65H 31/30* (2006.01)
*H01M 10/0583* (2010.01)   *H01M 4/04* (2006.01)
*H01M 4/139* (2010.01)   *H01M 10/04* (2006.01)
*H01M 10/0525* (2010.01)

(52)  Cooperative Patent Classification (CPC):
**H01M 4/04; B65H 31/10; B65H 31/3063;
B65H 45/101; H01M 4/0435; H01M 4/139;
H01M 10/0404; H01M 10/0459; H01M 10/0525;
H01M 10/0583; H01M 10/0585;** B65H 2301/4223;
B65H 2301/4461; B65H 2301/51232;
B65H 2701/1942;                              (Cont.)

(86)  International application number:
**PCT/CN2022/085765**

(87)  International publication number:
**WO 2023/193227 (12.10.2023 Gazette 2023/41)**

(54)  **APPARATUS AND CORRESPONDING METHOD FOR MANUFACTURING AN ELECTRODE
ASSEMBLY**

VORRICHTUNG UND ENTSPRECHENDES VERFAHREN ZUR HERSTELLUNG EINER
ELEKTRODENANORDNUNG

APPAREIL ET PROCÉDÉ DE FABRICATION D'UN ENSEMBLE D'ÉLECTRODES
CORRESPONDANT

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43)  Date of publication of application:
**07.02.2024  Bulletin 2024/06**

(73)  Proprietor: **Contemporary Amperex Technology
(Hong Kong) Limited
Central, Central And Western District (HK)**

(72)  Inventors:
• **CHEN, Canbin
Fujian 352100 (CN)**
• **HU, Jun
Fujian 352100 (CN)**
• **NI, Dajun
Fujian 352100 (CN)**

• **FENG, Shiping
Fujian 352100 (CN)**
• **CHANG, Wen
Fujian 352100 (CN)**
• **ZHENG, Qiuhui
Fujian 352100 (CN)**
• **WU, Qing
Fujian 352100 (CN)**
• **LU, Haoran
Fujian 352100 (CN)**
• **LEI, Yang
Fujian 352100 (CN)**
• **ZHAO, Baiquan
Fujian 352100 (CN)**
• **DUAN, Pengfei
Fujian 352100 (CN)**

**(Cont. next page)**

(74) Representative: **Gong, Jinping**
**CocreateIP**
**Neumarkter Straße 21**
**81673 München (DE)**

(56) References cited:
**CN-A- 111 786 004      CN-A- 111 786 031**
**CN-A- 111 864 248      CN-A- 111 916 839**

**CN-U- 207 183 427      CN-U- 212 277 278**
**CN-U- 213 459 845      CN-U- 213 459 845**

(52) Cooperative Patent Classification (CPC): (Cont.)
B65H 2801/72; Y02E 60/10; Y02P 70/50

## Description

## Technical Field

The present application relates to the technical field of batteries, in particular to an apparatus and method for manufacturing an electrode assembly as specified in the appended claim set.

## Background

Energy conservation and emission reduction are the key to sustainable development of the automotive industry, and due to the advantages in energy conservation and environmental protection, electric vehicles have become an important part of sustainable development of the automotive industry. Battery technologies are an important factor affecting the development of electric vehicles.

Generally, a battery includes a battery cell which includes an electrode assembly. The electrode assembly is formed by stacking or winding pole pieces including positive pole pieces and negative pole pieces, and electrical energy is generated by metal ions moving between the positive pole pieces and the negative pole pieces. In the manufacturing process of electrode assemblies formed by stacking pole pieces, an important process is to stack the pole pieces. Therefore, how to effectively stack pole pieces to obtain an electrode assembly has become a problem to be solved.

CN 213459845 U discloses an apparatus for manufacturing an electrode assembly according to the preamble of the appended claim 1.

## Summary of the Invention

The present invention provides an apparatus and method for manufacturing an electrode assembly as specified in the appended claim set, which can be used for effectively stacking pole pieces to obtain an electrode assembly.

In a first aspect, an apparatus for manufacturing an electrode assembly is provided, and the apparatus includes a driving portion used for driving pole pieces to fall the pole pieces from the driving portion; and a first support portion arranged below the driving portion and used for receiving the pole pieces falling from the driving portion, so that the pole pieces are stacked on the first support portion, where the distance between an initial position of the upper surface of the first support portion and the driving portion is a preset value, the preset value being in a range of W to 2W, the initial position being the position of the upper surface of the first support portion when receiving the first pole piece of the electrode assembly, and W being the length of each pole piece of the electrode assembly. The apparatus further includes a flattening mechanism, used for patting the electrode assembly to flatten the surface of the electrode assembly after the last pole piece of the electrode assembly is stacked.

In an embodiment of the present application, an apparatus for manufacturing an electrode assembly includes a driving portion and a first support portion, the driving portion being used for driving pole pieces to fall the pole pieces from the driving portion; and the first support portion being used for receiving the pole pieces falling from the driving portion, so that the pole pieces are stacked on the first support portion, and an electrode assembly formed by stacking multiple continuous pole pieces is obtained. Since the distance between the initial position of the upper surface of the first support portion and the driving portion is in a range of W to 2W, and W is the length of each pole piece, the space between the upper surface of the first support portion and the driving portion can accommodate up to two pole pieces to be stacked. In this way, when the driving portion is driving the latter pole piece to fall, the falling previous pole piece may be subjected to a downward force from the latter pole piece, and be stacked on the first support portion under the action of the force.

In one implementation, the preset value is in a range of W to $(1+\sqrt{3}/2)\mathrm{W}$ to ensure that an ith pole piece has a sufficient inclination relative to the upper surface of the first support portion, and the ith pole piece is easier to stack when subjected to a downward force from the (i+1)th pole piece. Preferably, the preset value is 1.5W.

In one implementation, the driving portion includes a driving roller and a driven roller arranged opposite to allow the pole pieces to fall between the driving roller and the driven roller, and the distance between the initial position and the driving portion is the distance between the initial position and the center of the driving roller.

In one implementation, every time the driving portion drives the pole piece with a length W, the first support portion descends by a distance S to maintain the distance between the surface of the pole pieces stacked on the first support portion and the driving portion at the preset value, S being the thickness of each pole piece.

As the thickness of the pole pieces stacked on the first support portion increases, the distance between the surface of the pole pieces stacked on the first support portion and the driving portion gradually decreases. To ensure that subsequent pole pieces are effectively stacked, the distance between the surface of the pole pieces stacked on the first support portion and the driving portion needs to be maintained in a range of the preset value. Therefore, in this embodiment, every time the driving portion drives a pole piece with a length W, that is, every time one more pole piece is added to the pole pieces stacked on the first support portion, the first support portion descends by a distance S, i.e., the thickness of one pole piece. This allows the distance between the surface of the pole pieces stacked on the first support portion and the driving portion to remain unchanged, thereby ensuring that each pole piece is effectively stacked, and every pole piece is stacked with the same effect.

In one implementation, the apparatus further includes a second support portion, arranged below the driving portion, and used for rising to a position where the height of the upper surface of the second support portion is the same as that of the upper surface of the first support portion after N pole pieces of the electrode assembly are stacked on the first support portion, and receiving the N pole pieces from the first support portion, N being less than M, M being the total number of the pole pieces included in the electrode assembly, and M and N being positive integers greater than 1.

When multiple electrode assemblies are continuously manufactured, to improve the manufacturing efficiency, a second support portion may be arranged, used for rising to a position where the upper surface of the second support portion is at the same height as that of the first support portion after N pole pieces of an electrode assembly are stacked on the first support portion, and receiving the N pole pieces from the first support portion, so that the remaining M-N pole pieces are stacked on the second support portion. In this way, after the M pole pieces are stacked, the first support portion may immediately return to the initial position thereof and start manufacturing the next electrode assembly, thereby improving the efficiency in manufacturing electrode assemblies.

In one implementation, every time the driving portion drives the pole piece with a length W, the second support portion descends by a distance S to maintain the distance between the surface of the pole pieces stacked on the second support portion and the driving portion at the preset value.

Similarly, as the thickness of the pole pieces stacked on the second support portion increases, the distance between the surface of the pole pieces stacked on the second support portion and the driving portion gradually decreases. To ensure that subsequent pole pieces are effectively stacked, the distance between the surface of the pole pieces stacked on the second support portion and the driving portion needs to be maintained in a range of the preset value. Therefore, in this embodiment, every time the driving portion drives a pole piece with a length W, that is, every time one more pole piece is added to the pole pieces stacked on the second support portion, the second support portion descends by a distance S, i.e., the thickness of one pole piece. This allows the distance between the surface of the pole pieces stacked on the second support portion and the driving portion to remain unchanged, thereby ensuring that each pole piece is effectively stacked, and every pole piece is stacked with the same effect.

In one implementation, the apparatus further includes a cutting knife arranged above the driving portion, and used for cutting off the pole pieces when the length of the pole pieces driven by the driving portion reaches M×W.

In one implementation, the apparatus further includes an accommodating portion, arranged between the driving portion and the first support portion, and including a first baffle and a second baffle that are spaced apart and form a cavity for accommodating the pole pieces.

In this embodiment, the first baffle and the second baffle of the accommodating portion may form a cavity for accommodating the pole pieces, so that the pole pieces are stacked within the cavity, and the problems such as position offset caused during stacking of the pole pieces are avoided.

In one implementation, the pole pieces include positive pole pieces and negative pole pieces, the negative pole pieces being alternately arranged on both sides of the positive pole pieces.

In one implementation, the pole pieces further include first separators and second separators arranged on both sides of the positive pole pieces respectively to separate the positive pole pieces from the negative pole pieces.

In one implementation, the positive pole pieces of two adjacent pole pieces of the electrode assembly are disconnected, or scores are formed between the positive pole pieces of the two adjacent pole pieces.

In this embodiment, the separators of two adjacent pole pieces are continuous, and by disconnecting the positive pole pieces of two adjacent pole pieces, the two adjacent pole pieces may be conveniently stacked under the traction of the separators; or, by forming scores or creases between the positive pole pieces of two adjacent pole pieces, the two adjacent pole pieces may be conveniently stacked under the traction of the separators and the positive pole pieces.

In one implementation, the apparatus further includes a blowing portion, arranged between the driving portion and the first support portion, and used for blowing air to the first pole piece after the first pole piece falls from the driving portion, so that the first pole piece is stacked on the upper surface of the first support portion.

Since there is no other pole piece providing a horizontal traction force for the first pole piece after the first pole piece falls, the first pole piece is blown to tilt by the blowing portion, such that the first pole piece may be stacked flat on the upper surface of the first support portion when subjected to a downward force from a second pole piece.

In one implementation, the blowing portion includes a first blowing mechanism and a second blowing mechanism arranged on both sides of a falling pole piece respectively; the first blowing mechanism is used for blowing air to the first pole piece when the side of the first pole piece where the negative pole piece is faces the second blowing mechanism; and the second blowing mechanism is used for blowing air to the first pole piece when the side of the first pole piece where the negative pole piece is faces the first blowing mechanism.

To locate a separator at the outermost side of the electrode assembly, a separator is to be in contact with the upper surface of the first support portion during stacking of the pole pieces. Since both sides of a positive pole piece are coated with the separators respectively, the positive pole piece of the first pole piece needs to be located below the negative pole piece. Therefore, in this embodiment, when the side of the first pole piece where the negative pole piece is faces the second blowing mechanism, the first blowing mechanism blows air to the first pole piece, so that the negative pole piece of the first pole piece faces upward after the first pole piece is stacked flat on the upper surface of the first support portion; and in contrast, when the side of the first pole piece where the negative pole piece is faces the first blowing mechanism, the second blowing mechanism blows air to the first pole piece, so that the negative pole piece of the first pole piece faces upward after the first pole piece is stacked flat on the upper surface of the first support portion.

Since the last pole piece cannot be subjected to a downward force from another pole piece, the last pole piece may not be stacked on the surface of the stacked pole pieces as flat as the other pole pieces. After the last pole piece is stacked, the electrode assembly can be shaped after being tapped by the flattening mechanism, and the surface of the resulting electrode assembly is flatter.

In a second aspect, a method for manufacturing an electrode assembly is provided, applied to said apparatus for manufacturing an electrode assembly; and the method includes the step of driving pole pieces by the driving portion to fall the pole pieces from the driving portion, the step of controlling the distance between the initial position of the upper surface of the first support portion and the driving portion to be the preset value, and receiving the pole pieces falling from the driving portion by the first support portion, so that the pole pieces are stacked on the first support portion.

In one implementation, the preset value is in a range of W to $(1+\sqrt{3}/2)W$.

In one implementation, the preset value is 1.5W.

In one implementation, the driving portion includes a driving roller and a driven roller arranged opposite to allow the pole pieces to fall between the driving roller and the driven roller, and the distance between the initial position and the driving portion is the distance between the initial position and the center of the driving roller.

In one implementation, the method further includes: every time the driving portion drives the pole piece with a length W, controlling the first support portion to descend by a distance S to maintain the distance between the surface of the pole pieces stacked on the first support portion and the driving portion at the preset value, S being the thickness of each pole piece.

In one implementation, the apparatus further includes a second support portion arranged below the driving portion; and the method further includes: controlling the second support portion to rise to a position where the height of the upper surface of the second support portion is the same as that of the upper surface of the first support portion after N pole pieces of the electrode assembly are stacked on the first support portion, and receiving the N pole pieces from the first support portion by the second support portion, N being less than M, M being the total number of the pole pieces included in the electrode assembly, and M and N being positive integers greater than 1.

In one implementation, the method further includes: every time the driving portion drives the pole piece with a length W, controlling the second support portion to descend by a distance S to maintain the distance between the surface of the pole pieces stacked on the second support portion and the driving portion at the preset value.

In one implementation, the apparatus further includes a cutting knife arranged above the driving portion; and the method further includes: cutting off the pole pieces by the cutting knife when the length of the pole pieces driven by the driving portion reaches M×W.

In one implementation, the apparatus further includes an accommodating portion, arranged between the driving portion and the first support portion, and including a first baffle and a second baffle that are spaced apart and form a cavity for accommodating the pole pieces.

In one implementation, the pole pieces include positive pole pieces and negative pole pieces, the negative pole pieces being alternately arranged on both sides of the positive pole pieces.

In one implementation, the pole pieces further include first separators and second separators arranged on both sides of the positive pole pieces respectively to separate the positive pole pieces from the negative pole pieces.

In one implementation, the positive pole pieces of two adjacent pole pieces of the electrode assembly are disconnected, or scores are formed between the positive pole pieces of the two adjacent pole pieces.

In one implementation, the apparatus further includes a blowing portion arranged between the driving portion and the first support portion; and the method further includes: blowing air to the first pole piece after the first pole piece falls from the driving portion, so that the first pole piece is stacked on the upper surface of the first support portion.

In one implementation, the blowing portion includes a first blowing mechanism and a second blowing mechanism arranged on both sides of a falling pole piece respectively; and the blowing air to the fist pole piece by the blowing portion incudes: blowing air to the first pole piece by the first blowing mechanism when the side of the first pole piece where the negative pole piece is faces the second blowing mechanism, and blowing air to the first pole piece by the second blowing mechanism when the side of the first pole piece where the negative pole piece is faces the first blowing mechanism.

In one implementation, the method further includes: patting the electrode assembly by the flattening mechanism to flatten the surface of the electrode assembly after the last pole piece of the electrode assembly is stacked.

In a third aspect, a computer-readable storage medium is provided for storing a computer program that causes a computer to perform the method in the second aspect or any implementation of the second aspect described above.

In a fourth aspect, a computer program is provided, which, when running on a computer, causes the computer to perform the method in the second aspect or any implementation of the second aspect described above.

## Description of Drawings

FIG. 1 is a structural diagram of an apparatus for manufacturing an electrode assembly according to an embodiment of the present application;
FIG. 2 is a structural diagram of pole pieces according to an embodiment of the present application;
FIG. 3 is a structural diagram of an apparatus for manufacturing an electrode assembly according to another embodiment of the present application;
FIG. 4 is a schematic flowchart of a method for manufacturing an electrode assembly according to an embodiment of the present application;
FIG. 5 is a schematic diagram of a specific implementation based on the method shown in FIG. 4.
FIG. 6 is a schematic diagram based on the specific implementation of the steps related to the blowing portion in the method shown in FIG. 5.

The drawings are not drawn to the actual scale.

Detailed Description

To make the objectives, technical solution, and advantages of the embodiments of the present application clearer, the technical solution in the embodiments of the present application will be clearly described below in conjunction with the drawings in the embodiments of the present application. Obviously, the described embodiments are part, not all, of the embodiments of the present application.

Unless otherwise defined, all technical and scientific terms used herein have the same meanings as those commonly understood by those skilled in the technical field of the present application. The terms used in the specification of the present application are only for the purpose of describing specific embodiments, and are not intended to limit the present application. The terms "include/comprise" and "have", as well as any variations thereof in the specification, claims, and accompanying drawings of the present application, are intended to cover non exclusive inclusion. The terms "first", "second", and the like in the specification and claims of the present application or in the above drawings are used for distinguishing different objects, rather than describing specific sequences or primary and secondary relationships. "Being vertical" does not mean being strictly vertical, but within an allowable range of error. "Being parallel" does not mean being strictly parallel, but within an allowable range of error.

The reference to "embodiments" in the present application means that specific features, structures, or characteristics described in combination with the embodiments may be included in at least one embodiment of the present application. The phrase appearing in various parts of the specification does not necessarily refer to the same embodiment, nor is it an independent or alternative embodiment mutually exclusive of other embodiments.

In the description of the present application, it should be noted that the terms "mounting", "connecting", "connection" and "attachment" should be understood in a broad sense, unless otherwise explicitly specified or defined. For example, it may be a fixed connection, a detachable connection, or an integrated connection; and it may be a direct connection or an indirect connection through an intermediate medium, or may be a communication between the interior of two elements. For those skilled in the art, the specific meaning of the above terms in the present application may be understood according to specific circumstances.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals represent the same components, and for simplicity, detailed descriptions of the same components are omitted in different embodiments.

"Multiple" in the present application refers to two or more, similarly, "multiple groups" refers to two or more groups, and "multiple pieces" refers to two or more pieces.

In the environment of automotive industry that uses traditional energy as the power supply, environmental pollution is becoming increasingly serious. Positive development of new energy vehicles can reduce environmental pollution. Battery technologies are an important factor affecting the development of new energy vehicles.

The battery mentioned herein refers to a single physical module that includes one or more battery cells to provide higher voltage and capacity. For example, the battery mentioned herein may include a battery module or battery pack, and the like. A battery generally includes a box for encapsulating one or more battery cells. The box may prevent liquid or other foreign matters from affecting charging or discharging of the battery cells.

In one implementation, battery cells may include lithium ion secondary batteries, lithium ion primary batteries, lithium sulfur batteries, sodium lithium ion batteries, sodium ion batteries, or magnesium ion batteries, which are not limited in the embodiments of the present application. Generally, a battery cell may also be called a cell. A battery cell may be cylindrical, flat, rectangular, or in other regular or irregular shapes. The technical solution of the embodiments of the present application may be applied to battery cells of any shape.

A battery cell includes an electrode assembly and an electrolyte solution, the electrode assembly including positive pole pieces, negative pole pieces, and separators. A battery cell works by mainly relying on metal ions moving between the positive and negative pole pieces. A positive pole piece includes a positive current collector and a positive active material layer, the surface of the positive current collector being coated with the positive active material layer, the current collector not coated with the positive active material layer protruding from the current collector coated with the positive active material layer, and the current collector not coated with the positive active material layer being used as a positive tab. Taking a lithium-ion battery as an example, the material of the positive current collector may be aluminum, and the positive active material may be lithium cobalt oxide, lithium iron phosphate, ternary lithium, lithium manganate, or the like. A negative pole piece includes a negative current collector and a negative active material layer, the surface of the negative current collector being coated with the negative active material layer, the current collector not coated with the negative active material layer protruding from the current collector coated with the negative active material layer, and the current collector not coated with the negative active material layer being used as a negative tab. The material of the negative current collector may be copper, and the negative active material may be carbon, silicon, or the like. To prevent fusing when a large current passes, multiple positive tabs are stacked together, and also multiple negative tabs are stacked together. The material of a separator may be polypropylene (PP), polyethylene (PE), or the like.

The electrode assembly of an embodiment of the present application includes multiple pole pieces stacked together, and the embodiment of the present application provides a solution to effectively stack the pole pieces to obtain the electrode assembly, that is, the distance between a first support portion and a driving portion is reasonably set to be W to 2W, W being the length of each pole piece, so that the pole pieces falling from the driving portion are effectively stacked on the first support portion under a downward force provided by the driving portion to the pole pieces.

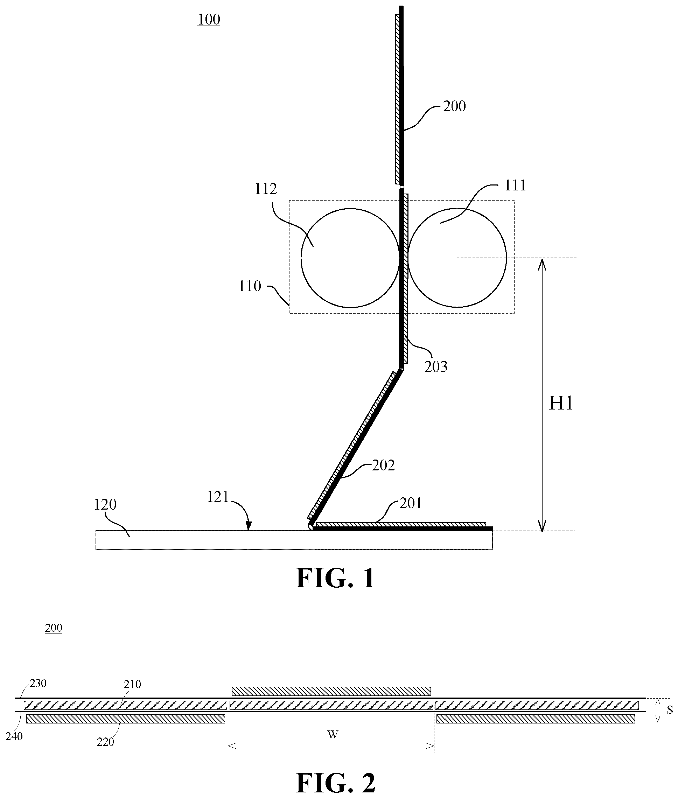

FIG. 1 shows an apparatus 100 for making an electrode assembly according to an embodiment of the present application. As shown in FIG. 1, the apparatus 100 includes a driving portion 110 and a first support portion 120.

The driving portion 110 is used for driving pole pieces 200 to fall the pole pieces 200 from the driving portion 110.

The first support portion 120 is arranged below the driving portion 110 and used for receiving the pole pieces 200 falling from the driving portion 110, so that the pole pieces 200 are stacked on the first support portion 120. The distance H1 between an initial position of an upper surface 121 of the first support portion 120 and the driving portion 110 is a preset value. The initial position of the upper surface 121 of the first support portion 120 is the position of the upper surface when the first support portion 120 receives the first pole piece of an electrode assembly. In an embodiment of the present application, the preset value is in a range of W to 2W, that is, the preset value is greater than W and less than 2W, and W is the length of each pole piece of the electrode assembly.

The value of W is 100 mm to 200 mm, e.g., 101 mm, 111.1 mm, or 190 mm.

It can be seen that in an embodiment of the present application, an apparatus 100 for manufacturing an electrode assembly includes a driving portion 110 and a first support portion 120, the driving portion 110 being used for driving multiple pole pieces 200 to fall multiple pole pieces 200 from the driving portion 110; and the first support portion 120 being used for receiving the multiple pole pieces 200 falling from the driving portion 110, so that the pole pieces 200 are stacked on the first support portion 120, and an electrode assembly formed by stacking the multiple continuous pole pieces 200 is obtained. Since the distance H1 between the initial position of the upper surface 121 of the first support portion 120 and the driving portion 110 is in a range of W to 2W, the height space between the upper surface 121 of the first support portion 120 and the driving portion 110 can accommodate up to two pole pieces 200 to be stacked. In this way, when the driving portion 110 is driving the latter pole piece to fall, the falling previous pole piece may be subjected to a downward force from the latter pole piece, and be stacked on the first support portion 120 under the action of the force. Moreover, the pole pieces 200 are effectively stacked without performing complex operations using other components, and the stacking efficiency is high.

In one implementation, the driving portion 110 includes a driving roller 111 and a driven roller 112 arranged opposite each other to allow the pole pieces 200 to fall between the driving roller 111 and the driven roller 112. At this time, the distance H1 between the initial position of the upper surface 121 of the first support portion 120 and the driving portion 110 is the distance H1 between the initial position and the center of the driving roller 111. That is, when the pole pieces 200 are driven to fall by the driving roller 111 and the driven roller 112, the distance H1 between the initial position of the upper surface 121 of the first support portion 120 and the center of the driving roller 111 is a preset value being in a range of W to 2W. The apparatus 100 will be described in detail below by taking the driving portion 110 including the driving roller 111 and the driven roller 112, and the distance H1 between the initial position of the upper surface 121 of the first support portion 120 and the center of the driving roller 111 being the preset value as an example.

In one implementation, the preset value is in a range of W to $(1+\sqrt{3}/2)W$ to ensure that the latter pole piece 202 has a sufficient inclination relative to the upper surface 121 of the first support portion 120, so that the previous pole piece 202 is easier to stack when subjected to a downward force from the latter pole piece 203. Preferably, the preset value is 1.5W.

FIG. 2 shows a possible structure of pole pieces 200 of an embodiment of the present application. As shown in FIG. 2, the pole pieces 200 include positive pole pieces 210 and negative pole pieces 220, the negative pole pieces 220 being alternately arranged on both sides of the positive pole pieces 210.

For example, as shown in FIG. 2 in which three pole pieces 200 are illustrated, the positive pole pieces 210 in the three pole pieces 200 are in the same line, where the negative pole piece 220 in the left pole piece 200 is at the lower side of the positive pole piece 210, the negative pole piece 220 in the middle pole piece 200 is at the upper side of the positive pole piece 210, and the negative pole piece 220 in the right pole piece 200 is at the lower side of the positive pole piece 210.

As shown in FIG. 2, the pole pieces 200 further include first separators 230 and second separators 240 arranged on both sides of the positive pole pieces 210 respectively to separate the positive pole pieces 210 from the negative pole pieces 220.

In one implementation, the positive pole pieces 210 of two adjacent pole pieces 200 of the electrode assembly are disconnected, or scores are formed between the positive pole pieces 210 of the two adjacent pole pieces 200.

For example, as shown in FIG. 2, the positive pole pieces 210 of the three pole pieces 200 are in the same line, but the positive pole pieces 210 of the three pole pieces 200 are disconnected from each other. At this time, during stacking of the pole pieces 200, two adjacent pole pieces 200 are connected to each other under the traction of the first separators 230 and the second separators 240.

Alternatively, unlike FIG. 2, the positive pole pieces 210 of two adjacent pole pieces 200 are connected to each other, but scores or creases are formed at the adjacent positions, so that during stacking of the pole pieces 200, the two adjacent pole pieces 200 are connected to each other under the traction of the first separators 230, the second separators 240, and the positive pole pieces 210.

Specifically, as shown in FIG. 2, a pole piece 200 is a composite pole piece strip, which is formed by attaching first separators 230 and second separators 240 to both sides of positive pole pieces 210, then alternately attaching negative pole pieces 220 to the first separators 230 and the second separators 240 on both sides of the positive pole pieces 210, and forming the pole piece 200 by rolling and compositing. Therefore, the pole piece 200 is formed by compositing two layers of separators, one layer of positive pole pieces 210, and one layer of negative pole pieces 220, and has a thickness of S=2Sa+Sb+Sc, where Sa is the thickness of the separators 130 and is also the thickness of the separators 140, Sb is the thickness of the positive pole pieces 210, Sc is the thickness of the negative pole pieces 220, and the length of the pole piece 220 along the strip direction is W. Hereinafter, the thickness of the pole piece 200 is denoted as S, and the length of each pole piece is denoted as W.

During stacking of the pole piece 200, as shown in FIG. 1, taking the ith pole piece 202 as an example, after the ith pole piece 202 falls between the driving roller 111 and the driven roller 112 and is to be stacked, on the one hand, because the driving portion 110 drives the (i+1)th pole piece 203 subsequently, the (i+1)th pole piece 203 receives a downward driving force, and the ith pole piece 202 may receive a downward force from the (i+1)th pole piece 203; and on the other hand, due to the traction of the (i-1) pole piece 201 stacked on the first support portion 120 to the ith pole piece 202, the ith pole piece 202 is subjected to left and downward traction forces. In this way, under the traction force of the (i-1)th pole piece 201 and the downward force provided by the (i+1)th pole piece 203, and combined with the gravity, the ith pole piece can be smoothly stacked on the (i-1)th pole piece 201.

It should be understood that here, i is greater than 1 and less than M, that is, i is in a range of 2 to M, M being a positive integer greater than 1. When i=1, that is, for the first pole piece, due to lack of the aforementioned traction force, an additional horizontal force is required to stack the first pole piece flat on the upper surface 121 of the first support portion 120.

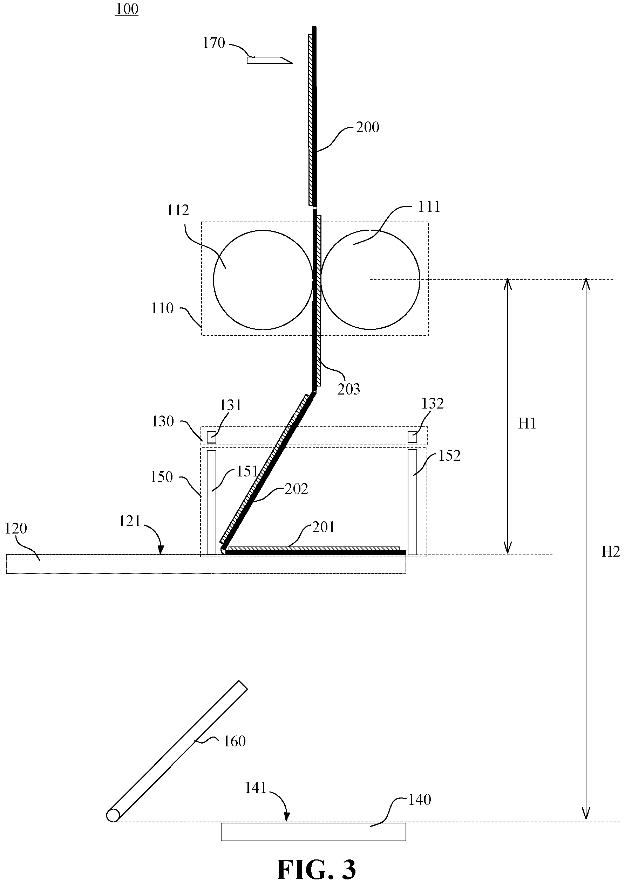

In one implementation, as shown in FIG. 3, the apparatus 100 further includes a blowing portion 130, arranged between the driving portion 110 and the first support portion 120, and used for blowing air to the first pole piece after the first pole piece falls from the driving portion 110, so that the first pole piece is stacked on the upper surface 121 of the first support portion 120.

It may be seen that, since there is no other pole piece providing a horizontal traction force for the first pole piece after the first pole piece falls, the first pole piece is blown to tilt by the blowing portion 130, such that the first pole piece may be stacked flat on the upper surface 121 of the first support portion 120 when subjected to a downward force from a second pole piece.

Generally, to locate a first separator 230 or a second separator 240 at the outermost side of the electrode assembly, the first separator 230 or the second separator 240 is to be in contact with the upper surface 121 of the first support portion 120 during stacking of the pole pieces 200. As can be seen from FIG. 2, since both sides of the positive pole piece 210 are coated with the first separator 230 and the second separator 240 respectively, the positive pole piece 210 of the first pole piece needs to be located below the negative pole piece 220.

For example, as shown in FIG. 3, the blowing portion 130 includes a first blowing mechanism 131 and a second blowing mechanism 132 arranged on both sides of a falling pole piece 200 respectively. The first blowing mechanism 131 is used for blowing air to the first pole piece when the side of the first pole piece where the negative pole piece 220 is faces the second blowing mechanism 132; and the second blowing mechanism 132 is used for blowing air to the first pole piece when the side of the first pole piece where the negative pole piece 220 is faces the first blowing mechanism 131.

Therefore, when the side of the first pole piece where the negative pole piece 220 is faces the second blowing mechanism 132, the first blowing mechanism 131 blows air to the first pole piece, so that the negative pole piece 220 of the first pole piece faces upward after the first pole piece is stacked flat on the upper surface 121 of the first support portion 120; and in contrast, when the side of the first pole piece where the negative pole piece 220 is faces the first blowing mechanism 131, the second blowing mechanism 132 blows air to the first pole piece, so that the negative pole piece 220 of the first pole piece faces upward after the first pole piece is stacked flat on the upper surface 121 of the first support portion 120.

Since the last pole piece cannot be subjected to a downward force from another pole piece, the last pole piece may not be stacked on the surface of the stacked pole pieces 200 as flat as the other pole pieces 200.

The apparatus 100 further includes a flattening mechanism 160 used for patting the electrode assembly to flatten the surface of the electrode assembly after the last pole piece of the electrode assembly is stacked.

In this way, after the last pole piece 200 is stacked, the electrode assembly can be shaped after being tapped by the flattening mechanism 160, and the surface of the resulting electrode assembly is flatter.

As can be seen from FIGs. 1 and 3, during stacking of the pole pieces 200, the thickness of the pole pieces 200 stacked on the first support portion 120 gradually increases. As the thickness of the pole pieces stacked on the first support portion 120 increases, the distance between the surface of the pole pieces 200 stacked on the first support portion 120 and the driving portion 110 gradually decreases. To ensure that subsequent pole pieces 200 are effectively stacked, the distance between the surface of the pole pieces stacked on the first support portion 120 and the driving portion 110 needs to be maintained in a range of the preset value. That is, during stacking of the pole pieces 200, the distance between the surface of the pole pieces stacked on the first support portion 120 and the driving portion 110 is to be W to 2W, or, further, W to $(1+\sqrt{3}/2)W$. Preferably, during stacking of the pole pieces 200, the distance between the surface of the pole pieces stacked on the first support portion 120 and the driving portion 110 remains unchanged, for example, equal to the preset value, e.g., 1.5W.

In one implementation, every time the driving portion 110 drives a pole piece with a length W, the first support portion 120 descends by a distance S to maintain the distance between the surface of the pole pieces 200 stacked on the first support portion 120 and the driving portion 110 at the preset value.

Every time the driving portion 110 drives a pole piece with a length W, that is, every time one pole piece is driven, one more pole piece is added to the pole pieces 200 stacked on the first support portion 120. Therefore, every time the driving portion 110 drives a pole piece with a length W, the first support portion 120 descends by a distance S, i.e., the thickness of one pole piece. This allows the distance between the surface of the pole pieces stacked on the first support portion 120 and the driving portion 110 to remain unchanged, thereby ensuring that each pole piece 200 is effectively stacked, and every pole piece 200 is stacked with the same effect.

Actually, the pole pieces 200 can be effectively stacked as long as the distance between the surface of the pole pieces stacked on the first support portion 120 and the driving portion 110 is within an appropriate range. Therefore, in the embodiment of the present application, every time the driving portion 110 drives a pole piece 200 of another length, e.g., a pole piece 200 with a length K1×W, i.e., a K1 pole piece 200, the first support portion 120 descends by a predetermined distance, e.g., a distance K2×S, i.e., the thickness of a K2 pole piece 200. K1 may be equal to K2, as long as it is ensured that the distance between the surface of the pole pieces 200 stacked on the first support portion 120 and the driving portion 110 is within an appropriate range, e.g., W to 2W, or W to $(1+\sqrt{3}/2)W$ when each pole piece 200 is stacked.

When multiple electrode assemblies are continuously manufactured, to improve the manufacturing efficiency, in one implementation, the apparatus 100 further includes a second support portion 140. The second support portion 140 is arranged below the driving portion 110, and used for rising to a position where the height of the upper surface 141 of the second support portion 140 is the same as the current height of the upper surface 121 of the first support portion 120 after N pole pieces 200 of the electrode assembly are stacked on the first support portion 120, and receiving the N pole pieces 200 from the first support portion 120. N is less than M, M is the total number of the pole pieces 200 included in the electrode assembly, and M and N are positive integers greater than 1.

For example, as shown in FIG. 3, the distance between the initial position of the upper surface 141 of the second support portion 140 and the center of the driving roller 111 is H2, H2 is greater than H1, and the value of H2 is not limited in the present application. The second support portion 140 rises to a position where the height of the upper surface 141 of the second support portion 140 is the same as the current height of the upper surface 121 of the first support portion 120 after N pole pieces are stacked on the first support portion 120, the rising height of the second support portion 140 being, e.g., H2-H1+N×S. Next, the second support portion 140 receives the N pole pieces 200 from the first support portion 120, so that the remaining M-N pole pieces 200 are stacked on the second support portion 140. In this way, after the M pole pieces 200 are stacked, the second support portion 140 may transfer the M pole pieces 200 to the next process, while the first support portion 120 may immediately return to the initial position thereof and start manufacturing the next electrode assembly, thereby improving the efficiency in manufacturing electrode assemblies.

The first support portion 120 and the second support portion 140 may be, e.g., support plates or insertion plates. One of the first support portion 120 and the second support portion 140 may be provided with an avoidance groove, and the other may be provided with a protrusion, the position of the avoidance groove corresponding to that of the protrusion. For example, the first support portion 120 is provided with an avoidance groove, and the second support portion 140 is provided with a protrusion corresponding to the avoidance groove, the avoidance groove being cooperative with the protrusion, the protrusion being capable of extending into or retracting out of the avoidance groove, and the protrusion being used for carrying the stacked pole pieces 200. The second support portion 140 rises to a position where the height of the upper surface 141 of the second support portion 140 is the same as the current height of the upper surface 121 of the first support portion 120 after N pole pieces 200 are stacked on the first support portion 120, so that the protrusion extends into the avoidance groove to receive the N pole pieces 200. Then, the first support portion 120 is retracted in a horizontal direction, i.e., the avoidance groove moves relative to the protrusion, and the first support portion 120 no longer supports the pole pieces 200.

Similarly, as the thickness of the pole pieces 200 stacked on the second support portion 140 increases, the distance between the surface of the pole pieces 200 stacked on the second support portion 140 and the driving portion 110 gradually decreases. To ensure that subsequent pole pieces 200 are effectively stacked, the distance between the surface of the pole pieces 200 stacked on the second support portion 140 and the center of the driving roller 222 needs to be maintained in a range of the preset value. That is, during stacking of the remaining M-N pole pieces 200, the distance between the surface of the pole pieces stacked on the second support portion 140 and the driving portion 110 is to be W to 2W, or, further, W to $\left(1+\sqrt{3}/2\right)\text{W}$. Preferably, during stacking of the pole pieces 200, the distance between the surface of the pole pieces stacked on the second support portion 140 and the driving portion 110 remains unchanged, for example, equal to the preset value, e.g., 1.5W.

In one implementation, every time the driving portion 110 drives a pole piece with a length W, the second support portion 140 descends by a distance S to maintain the distance between the surface of the pole pieces stacked on the second support portion 140 and the driving portion 110 at the preset value.

Every time the driving portion 110 drives a pole piece with a length W, that is, every time one pole piece is driven, one more pole piece is added to the pole pieces 200 stacked on the second support portion 140. Therefore, every time the driving portion 110 drives a pole piece with a length W, the second support portion 140 descends by a distance S, i.e. the thickness of one pole piece. This allows the distance between the surface of the pole pieces stacked on the second support portion 140 and the driving portion 110 to remain unchanged, thereby ensuring that each subsequent pole piece 200 is effectively stacked, and every pole piece 200 is stacked with the same effect.

Reference may be made to the previous description of the first support portion 120 for specific details of the second support portion 140, which will not be repeated here for simplicity.

In one implementation, as shown in FIG. 3, the apparatus 100 further includes a cutting knife 170, arranged above the driving portion 110, and used for cutting off the pole piece 200 when the length of the pole piece 200 driven by the driving portion 110 reaches M×W, thereby completing stacking of M pole pieces 200 of an electrode assembly.

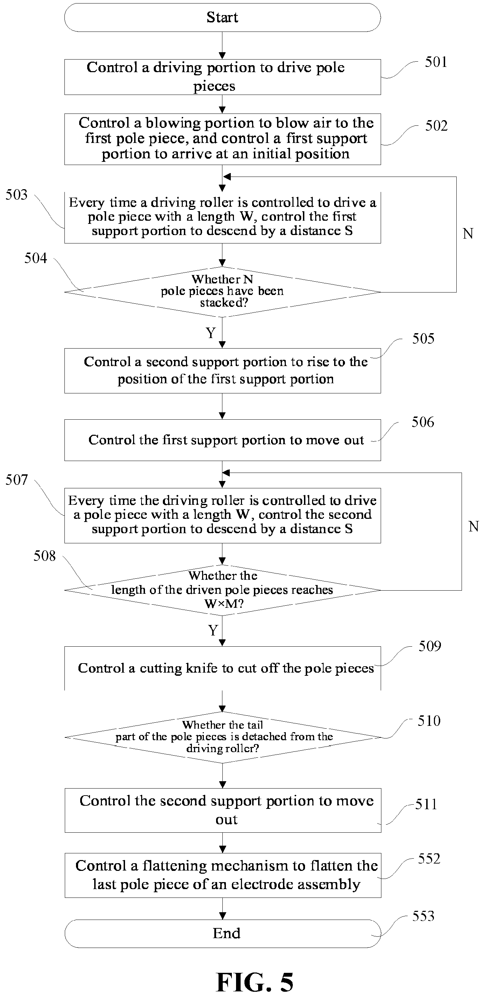

In one implementation, the apparatus 100 further includes an accommodating portion 150 arranged between the driving portion 110 and the first support portion 120. The accommodating portion 150 is used for accommodating pole pieces 200 to be stacked, and for example, as shown in FIG. 5, the accommodating portion 150 includes a first baffle 151 and a second baffle 152 that are spaced apart and form a cavity for accommodating the pole pieces 200.

In this embodiment, the first baffle 151 and the second baffle 152 of the accommodating portion 150 may form a cavity for accommodating the pole pieces 200, so that the pole pieces 200 are stacked within the cavity, and the problems such as position offset caused during stacking of the pole pieces 200 are avoided.

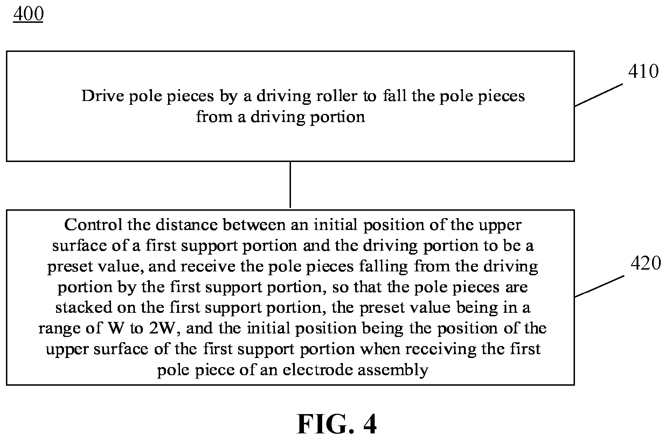

The apparatus 100 for manufacturing an electrode assembly of the embodiments of the present application is described above in conjunction with FIGs. 1 to 3, and a method 400 for manufacturing an electrode assembly provided in the embodiments of the present application will be described below in conjunction with FIGs. 4 to 6.

As shown in FIG. 4, a method for manufacturing an electrode assembly is provided, applied to the apparatus 100 for manufacturing an electrode assembly, the apparatus 100 including a driving portion 110 and a first support portion 120, and the first support portion 120 being arranged below the driving portion 110. As shown in FIG. 4, the method 400 includes some or all of the following steps.

In step 410, a pole piece 200 is driven by a driving portion 110 to fall the pole piece 200 from the driving portion 110.

In step 420, the distance H1 between an initial position of the upper surface 121 of the first support portion 120 and the driving portion 110 is controlled to be a preset value, and the pole pieces 200 falling from the driving portion 110 are received by the first support portion 120, so that the pole pieces 200 are stacked on the first support portion 120. The preset value is in a range of W to 2W, the initial position is the position of the upper surface 121 of the first support portion 120 when receiving the first pole piece of the electrode assembly, and W is the length of each pole piece 200 of the electrode assembly.

Based on the method 400, the driving portion 110 is controlled to drive the pole pieces 200 to fall the pole pieces 200 from the driving portion 110, the pole pieces 200 falling from the driving portion 110 are received by the first support portion 120, so that the pole pieces 200 are stacked on the first support portion 120, and an electrode assembly formed by stacking multiple continuous pole pieces 200 is obtained. Since the distance H1 between the initial position of the upper surface 121 of the first support portion 120 and the driving portion 110 is in a range of W to 2W, the space between the upper surface 121 of the first support portion 120 and the driving portion 120 can accommodate up to two pole pieces 200 to be stacked. In this way, when the driving portion 120 is driving the latter pole piece to fall, the falling previous pole piece 202 may be subjected to a downward force from the latter pole piece, and be stacked on the first support portion 120 under the action of the force.

In one implementation, the preset value is in a range of W to $(1+\sqrt{3}/2)W$ to ensure that the latter pole piece 202 has a sufficient inclination relative to the upper surface 121 of the first support portion 120, so that the previous pole piece 202 is easier to stack when subjected to a downward force from the latter pole piece 203. Preferably, the preset value is 1.5W.

In one implementation, the driving portion 110 includes a driving roller 111 and a driven roller 112 arranged opposite each other to allow the pole pieces 200 to fall between the driving roller 111 and the driven roller 112. At this time, the distance H1 between the initial position of the upper surface 121 of the first support portion 120 and the driving portion 110 is the distance H1 between the initial position and the center of the driving roller 111.

As the thickness of the pole pieces 200 stacked on the first support portion 120 increases, the distance between the surface of the pole pieces 200 stacked on the first support portion 120 and the driving portion 110 gradually decreases. To ensure that subsequent pole pieces 200 are effectively stacked, the distance between the surface of the pole pieces 200 stacked on the first support portion 120 and the driving portion 110 needs to be maintained in a range of the preset value. Therefore, every time the driving portion 110 drives a pole piece with a length W, that is, every time one more pole piece is added to the pole pieces 200 stacked on the first support portion 120, the first support portion 120 descends by a distance S, i.e., the thickness of one pole piece. This allows the distance between the surface of the pole pieces stacked on the first support portion 120 and the driving portion 110 to remain unchanged, thereby ensuring that each pole piece 200 is effectively stacked, and every pole piece 200 is stacked with the same effect.

When multiple electrode assemblies are continuously manufactured, to improve the manufacturing efficiency, in one implementation, the apparatus 100 further includes a second support portion 140 arranged below the driving portion 110. The method 400 further includes: the second support portion 140 is controlled to rise to a position where the height of the upper surface 141 of the second support portion 140 is the same as that of the upper surface 121 of the first support portion 120 after N pole pieces 200 of an electrode assembly are stacked on the first support portion 120, and the N pole pieces 200 are received from the first support portion 120 by the second support portion 140, N being less than M, M being the total number of the pole pieces 200 included in the electrode assembly, and M and N being positive integers greater than 1.

The second support portion 140 is controlled to rise to a position where the height of the upper surface 141 of the second support portion 140 is the same as the current height of the upper surface 121 of the first support portion 120 after N pole pieces are stacked on the first support portion 120, and the second support portion 140 receives the N pole pieces 200 from the first support portion 120, so that the remaining M-N pole pieces 200 are stacked on the second support portion 140. In this way, after the M pole pieces 200 are stacked, the second support portion 140 may transfer the M pole pieces 200 to the next process, while the first support portion 120 may immediately return to the initial position thereof and start manufacturing the next electrode assembly, thereby improving the efficiency in manufacturing electrode assemblies.

In one implementation, the method 400 further includes: every time the driving portion 110 drives the pole piece 200 with a length W, the second support portion 140 is controlled to descend by a distance S to maintain the distance between the surface of the pole pieces 200 stacked on the second support portion 140 and the driving portion 110 at the preset value.

Similarly, as the thickness of the pole pieces 200 stacked on the second support portion 140 increases, the distance between the surface of the pole pieces 200 stacked on the second support portion 140 and the driving portion 110 gradually decreases. To ensure that subsequent pole pieces 200 are effectively stacked, the distance between the surface of the pole pieces 200 stacked on the second support portion 140 and the center of the driving roller 222 needs to be maintained in a range of the preset value. Therefore, in this embodiment, every time the driving portion 110 is controlled to drive a pole piece with a length W, that is, every time one more pole piece is added to the pole pieces 200 stacked on the second support portion 140, the second support portion 140 is controlled to descend by a distance S, i.e., the thickness of one pole piece. This allows the distance between the surface of the pole pieces 200 stacked on the second support portion 140 and the driving portion 110 to remain unchanged, thereby ensuring that each pole piece is effectively stacked, and every pole piece is stacked with the same effect.

In one implementation, the apparatus 100 further includes a cutting knife 150 arranged above the driving portion 110; and the method 400 further includes: the pole pieces 200 are cut off by the cutting knife 150 when the length of the pole pieces 200 driven by the driving portion 110 reaches M×W.

In one implementation, the apparatus 100 further includes an accommodating portion 150, arranged between the driving portion 110 and the first support portion 120, and including a first baffle 151 and a second baffle 152 that are spaced apart and form a cavity for accommodating the pole pieces 200. Thus, the pole pieces 200 are stacked within the cavity, and the problems such as position offset caused during stacking of the pole pieces 200 are avoided.

In one implementation, the pole pieces 200 include positive pole pieces 210 and negative pole pieces 220, and the negative pole pieces 220 are alternately arranged on both sides of the positive pole pieces 210.

In one implementation, the pole pieces 200 further include first separators 230 and second separators 240 arranged on both sides of the positive pole pieces 210 respectively to separate the positive pole pieces 210 from the negative pole pieces 220.

In one implementation, the positive pole pieces 210 of two adjacent pole pieces 200 of the electrode assembly are disconnected, or scores are formed between the positive pole pieces 210 of the two adjacent pole pieces 200.

The first separators 230 and the second separators 240 of two adjacent pole pieces 200 are continuous, and by disconnecting the positive pole pieces 210 of two adjacent pole pieces 200, the two adjacent pole pieces 200 may be conveniently stacked under the traction of the first separators 230 and the second separators 240; or, by forming scores or creases between the positive pole pieces 210 of two adjacent pole pieces 200, the two adjacent pole pieces 200 may be conveniently stacked under the traction of the first separators 230, the second separators 240, and the positive pole pieces 210.

In one implementation, the apparatus 100 further includes a blowing portion 130 arranged between the driving portion 110 and the first support portion 120. The method 400 further includes: the blowing portion 130 blows air to the first pole piece after the first pole piece falls from the driving portion 110, so that the first pole piece is stacked on the upper surface 121 of the first support portion 120.

Since there is no other pole piece providing a horizontal traction force for the first pole piece after the first pole piece falls, the first pole piece is blown to tilt by the blowing portion 130, such that the first pole piece may be stacked flat on the upper surface 121 of the first support portion 120 when subjected to a downward force from a second pole piece.

In one implementation, the blowing portion 130 includes a first blowing mechanism 131 and a second blowing mechanism 132 arranged on both sides of a falling pole piece 200 respectively. The blowing air to the first pole piece by blowing portion 130 includes: the first blowing mechanism 131 blows air to the first pole piece when the side of the first pole piece where the negative pole piece 220 is faces the second blowing mechanism 132; and the second blowing mechanism 132 blows air to the first pole piece when the side of the first pole piece where the negative pole piece 220 is faces the first blowing mechanism 131.

To locate a first separator 230 or a second separator 240 at the outermost side of the electrode assembly, the first separator 230 or the second separator 240 is to be in contact with the upper surface 121 of the first support portion 120 during stacking of the pole pieces 200. Since both sides of the positive pole piece 210 are coated with the first separator 230 and the second separator 240 respectively, the positive pole piece 210 of the first pole piece needs to be located below the negative pole piece 220. Therefore, in this embodiment, when the side of the first pole piece where the negative pole piece 220 is faces the second blowing mechanism 132, the first blowing mechanism 131 blows air to the first pole piece, so that the negative pole piece 220 of the first pole piece faces upward after the first pole piece is stacked flat on the upper surface 121 of the first support portion 120; and in contrast, when the side of the first pole piece where the negative pole piece 220 is faces the first blowing mechanism 131, the second blowing mechanism 132 blows air to the first pole piece, so that the negative pole piece 220 of the first pole piece faces upward after the first pole piece is stacked flat on the upper surface 121 of the first support portion 120.

The apparatus 100 further includes a flattening mechanism 160; and the method 400 further includes: the electrode assembly is patted by the flattening mechanism 160 to flatten the surface of the electrode assembly after the last pole piece of the electrode assembly is stacked.

It should be understood that reference may be made to the previous description of the apparatus 100 for specific details of the method 400, which will not be repeated here for simplicity.

FIG. 5 shows a potential specific implementation based on the method 400 as shown in FIG. 4. As shown in FIG. 5, an electrode assembly may be manufactured using the apparatus 100 as shown in FIG. 3 controlled by the method 400 according to the following steps.

As shown in FIG. 5, in step 501, the driving portion 110 is controlled to drive the pole pieces 200.

In step 502, the blowing portion 130 is controlled to blow air to the first pole piece, and the first support portion 120 is controlled to arrive at an initial position.

In step 503, every time the driving roller 111 is controlled to drive a pole piece with a length W, the first support portion 120 is controlled to descend by a distance S.

In step 504, whether the number of the pole pieces 200 stacked on the first support portion 120 is N is judged.

If the number of the pole pieces 200 stacked on the first support portion 120 is N, step 505 is performed.

In step 505, the second support portion 140 rises to a position where the first support portion 120 is.

At this time, the second support portion 140 rises, so that the height of the surface 141 of the second support portion 140 is the same as the current height of the surface 121 of the first support portion 120.

In step 506, the first support portion 120 is controlled to move out, and the N pole pieces 200 are received by the second support portion 140.

In step 507, every time the driving roller 111 is controlled to drive a pole piece with a length W, the second support portion 140 is controlled to descend by a distance S.

In step 508, whether the length of the pole pieces 200 driven by the driving portion 110 reaches W×M is judged.

If the length of the pole pieces 200 driven by the driving portion 110 reaches W×M, step 509 is performed.

In step 509, the cutting knife 150 is controlled to cut off the pole pieces 200.

In step 510, whether the tail part of the pole pieces 200 is completely detached from the driving roller 111 is judged.

If the tail part of the pole pieces 200 is not completely detached from the driving roller 111, step 511 is performed.

In step 511, the second support portion 140 is controlled to move out.

In step 512, the flattening mechanism 140 is controlled to flatten the last pole piece of the electrode assembly.

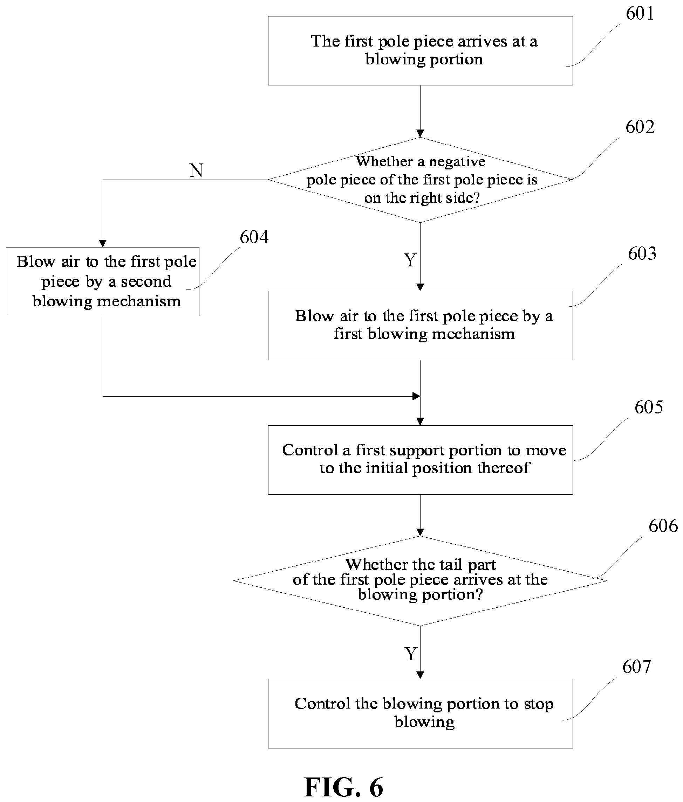

Reference may be made to FIG. 6 for specific control of the blowing part 130 and the first support portion 120 in step 502.

As shown in FIG. 6, in step 601, it is determined that the first pole piece arrives at the blowing portion 130.

In step 602, whether the negative pole piece 220 of the first pole piece is on the right side is judged.

If the negative pole piece 220 of the first pole piece is on the right side, step 603 is performed; and if the negative pole piece 220 of the first pole piece is on the left side, step 604 is performed.

In step 603, the first blowing mechanism 131 on the left side blows air to the first pole piece.

In step 604, the second blowing mechanism 132 on the right side blows air to the first pole piece.

In step 605, the first support portion 120 is controlled to move to the initial position thereof.

The initial position of the first support portion 120 meets the condition that the distance H1 between the upper surface 121 of the first support portion 120 and the center of the driving roller 11 is a preset value, e.g., the preset value may be 1.5W.

In step 606, whether the tail part of the first pole piece arrives at the blowing portion 130 is determined.

If the tail part of the first pole piece arrives at the blowing portion 130, step 607 is performed.

In step 607, the blowing portion 130 is controlled to stop blowing.

It can be seen that based on the method 400 as shown in FIGs. 5 and 6, the distance H1 between the initial position of the upper surface 121 of the first support portion 120 and the driving roller 111 is set to be a preset value, so that the space between the upper surface 121 of the first support portion 120 and the driving portion 110 can accommodate up to two pole pieces 200 to be stacked. In this way, when the driving portion 110 is driving the latter pole piece to fall, the adjacent falling previous pole piece may be subjected to a downward force from the latter pole piece, and be stacked on the first support portion 120 under the action of the force. Moreover, the pole pieces 200 are effectively stacked without performing complex operations using other components, and the stacking efficiency is high.

Those of ordinary skill in the art may realize that units and algorithm steps of each example described in combination with the embodiments disclosed herein can be implemented in electronic hardware, or a combination of computer software and electronic hardware. Whether these functions are performed in hardware or software depends on the specific application and design constraint of the technical solution. Those skilled in the art may implement the described functions by different methods for each specific application.

Those skilled in the art may clearly understand that, for the convenience and brevity of description, the specific working process of the systems, apparatuses, and units described above may be obtained with reference to the corresponding process in the foregoing method embodiments, which will not be repeated here.

In some embodiments provided in the present application, it should be understood that the disclosed systems, apparatuses, and methods may be implemented in other manners. For example, the apparatus example described above is only illustrative. For example, the division of the units is only a logical function division. In an actual implementation, there may be other division methods. For example, a plurality of units or components may be combined or may be integrated into another system, or some features may be ignored, or not implemented. On the other hand, the shown or discussed mutual coupling or direct coupling or communication connection may be indirect coupling or communication connection through some interfaces, apparatuses, or units, and may be in electrical, mechanical, or in other forms.

The units described as separate components may or may not be physically separated, and components displayed as units may or may not be physical units, that is, may be located in one place, or may be distributed to a plurality of network units. Some or all of the units may be selected according to actual needs to achieve the purpose of the solution in this example.

**Claims**

1. An apparatus (100) for manufacturing an electrode assembly, the apparatus (100) comprising:

    a driving portion (110), used for driving pole pieces (200) to fall the pole pieces (200) from the driving portion (110); and
    a first support portion (120), arranged below the driving portion (110), and used for receiving the pole pieces (200) falling from the driving portion (110), so that the pole pieces (200) are stacked on the first support portion (120), the distance (H1) between an initial position of the upper surface (121) of the first support portion (120) and the driving portion (110) being a preset value, the preset value being in a range of W to 2W, the initial position being the position of the upper surface of the first support portion (120) when receiving the first pole piece of the electrode assembly, and W being the length of each pole piece (200) of the electrode assembly;
    wherein W is 100 mm to 200 mm;
    **characterised in that** the apparatus (100) further comprises:
    a flattening mechanism (160), used for patting the electrode assembly to flatten the surface of the electrode assembly after the last pole piece (200) of the electrode assembly is stacked.

2. The apparatus (100) according to claim 1, wherein the preset value is in a range of W to

$(1+\sqrt{3}/2)\mathrm{W}$.

3. The apparatus (100) according to claim 2, wherein the preset value is 1.5W.

4. The apparatus (100) according to any one of claims 1 to 3, wherein the driving portion (110) comprises a driving roller (111) and a driven roller (112) arranged opposite each other to allow the pole pieces (200) to fall between the driving roller (111) and the driven roller (112), and the distance (H1) between the initial position and the driving portion (110) is the distance (H1) between the initial position and the center of the driving roller (111);
and/or
wherein every time the driving portion (110) drives the pole piece (200) with a length W, the first support portion (120) descends by a distance S to maintain the distance between the surface of the pole pieces (200) stacked on the first support portion (120) and the driving portion (110) at the preset value, and S is the thickness of each pole piece (200).

5. The apparatus (100) according to any one of claims 1 to 4, wherein the apparatus (100) further comprises: a second support portion (140), arranged below the driving portion (110), and used for rising to a position where the height of the upper surface (141) of the second support portion (140) is the same as that of the upper surface (121) of the first support portion (120) after N pole pieces (200) of the electrode assembly are stacked on the first support portion (120), and receiving the N pole pieces (200) from the first support portion (120), N being less than M, M being the total number of the pole pieces (200) comprised in the electrode assembly, and M and N being positive integers greater than 1.

6. The apparatus (100) according to claim 5, wherein every time the driving portion (110) drives the pole piece (200) with a length W, the second support portion (140) descends by a distance S to maintain the distance between the surface of the pole pieces (200) stacked on the second support portion (140) and the driving portion (110) at the preset value.

7. The apparatus (100) according to claim 6, wherein the apparatus (100) further comprises:
a cutting knife (170), arranged above the driving portion (110), and used for cutting off the pole pieces (200) when the length of the pole pieces (200) driven by the driving portion (110) reaches M×W.

8. The apparatus (100) according to any one of claims 1 to 7, wherein the apparatus (100) further comprises: an accommodating portion (150), arranged between the driving portion (110) and the first support portion (120), the accommodating portion (150) comprising a first baffle (151) and the second baffle (152) that are spaced apart and form a cavity for accommodating the pole pieces (200).

9. The apparatus (100) according to any one of claims 1 to 8, wherein the pole pieces (200) comprise positive pole pieces (210) and negative pole pieces (220), and the negative pole pieces (220) are alternately arranged on both sides of the positive pole pieces (210).

10. The apparatus (100) according to claim 9, wherein the pole pieces (200) further comprise first separators (230) and second separators (240), and the first separators (230) and the second separators (240) are arranged on both sides of the positive pole pieces (210) respectively to separate the positive pole pieces (210) from the negative pole pieces (220).

11. The apparatus (100) according to claim 9 or 10, wherein the positive pole pieces (210) of two adjacent pole pieces (200) of the electrode assembly are disconnected, or scores are formed between the positive pole pieces (210) of the two adjacent pole pieces (200).

12. The apparatus (100) according to any one of claims 1 to 11, wherein the apparatus (100) further comprises: a blowing portion (130), arranged between the driving portion (110) and the first support portion (120), and used for blowing air to the first pole piece after the first pole piece falls from the driving portion (110), so that the first pole piece is stacked on the upper surface of the first support portion (120).

13. The apparatus (100) according to claim 12, wherein the blowing portion (130) comprises a first blowing mechanism (131) and a second blowing mechanism (132), the first blowing mechanism (131) and the second blowing mechanism (132) being arranged on both sides of the falling pole pieces (200) respectively;

the first blowing mechanism (131) is used for blowing air to the first pole piece when the side of the first pole piece where the negative pole piece (220) is faces the second blowing mechanism (132); and
the second blowing mechanism (132) is used for blowing air to the first pole piece when the side of the first pole piece where the negative pole piece (220) is faces the first blowing mechanism (131).

14. A method (400) for manufacturing an electrode assembly, wherein the method (400) is applied to an apparatus (100) for manufacturing an electrode assembly according to any of claims 1-13, and the method (400) comprises:

the step (410) of driving pole pieces (200) by the driving portion (110) to fall the pole pieces (200) from the driving portion (110); and
the step (420) of controlling the distance (H1) between the initial position of the upper surface (121) of the first support portion (120) and the driving portion (110) at the preset value, and receiving the pole pieces (200) falling from the driving portion (110) by the first support portion (120), so that the pole pieces (200) are stacked on the first support portion (120).

**Patentansprüche**

1. Vorrichtung (100) zur Herstellung einer Elektrodenanordnung, wobei die Vorrichtung (100) umfasst:

einen Antriebsabschnitt (110), der dazu ausgelegt ist, Polbleche (200) anzutreiben, um die Polbleche (200) aus dem Antriebsabschnitt (110) herabfallen zu lassen; und
einen ersten Trägerabschnitt (120), der unterhalb des Antriebsabschnitts (110) angeordnet ist und dazu verwendet wird, die aus dem Antriebsabschnitt (110) herabfallenden Polbleche (200) aufzunehmen, sodass die Polbleche (200) auf dem ersten Trägerabschnitt (120) gestapelt werden, wobei der Abstand (H1) zwischen einer Anfangsposition der Oberseite (121) des ersten Trägerabschnitts (120) und dem Antriebsabschnitt (110) ein vorgegebener Wert ist, wobei der vorgegebene Wert in einem Bereich von W bis 2W liegt, wobei die Anfangsposition die Position der Oberseite des ersten Trägerabschnitts (120) beim Aufnehmen des ersten Polblechs der Elektrodenanordnung ist und W die Länge jedes Polblechs (200) der Elektrodenanordnung ist; wobei W 100 mm bis 200 mm ist;
**dadurch gekennzeichnet, dass** die Vorrichtung (100) ferner umfasst:
einen Glättungsmechanismus (160), der dazu ausgelegt ist, auf die Elektrodenanordnung zu klopfen, um eine Oberfläche der Elektrodenanordnung zu ebnen, nachdem das letzte Polblech (200) der Elektrodenanordnung gestapelt ist.

2. Vorrichtung (100) nach Anspruch 1, wobei der vorgegebene Wert in einem Bereich von W bis

$$\left(1 + \sqrt{3}/2\right)W$$ liegt.

**3.** Vorrichtung (100) nach Anspruch 2, wobei der vorgegebene Wert 1,5W beträgt.

**4.** Vorrichtung (100) nach einem der Ansprüche 1 bis 3, wobei der Antriebsabschnitt (110) eine Antriebswalze (111) und eine angetriebene Walze (112) umfasst, die einander gegenüberliegend angeordnet sind, um die Polbleche (200) zwischen der Antriebswalze (111) und der angetriebenen Walze (112) hindurch fallen zu lassen, und der Abstand (H1) zwischen der Anfangsposition und dem Antriebsabschnitt (110) der Abstand (H1) zwischen der Anfangsposition und dem Mittelpunkt der Antriebswalze (111) ist; und/oder wobei jedes Mal, wenn der Antriebsabschnitt (110) das Polblech (200) mit einer Länge W antreibt, der erste Trägerabschnitt (120) um einen Abstand S nach unten bewegt wird, um den Abstand zwischen der Oberfläche der auf dem ersten Trägerabschnitt (120) gestapelten Polbleche (200) und dem Antriebsabschnitt (110) auf dem vorgegebenen Wert zu halten, und S die Dicke jedes Polblechs (200) ist.

**5.** Vorrichtung (100) nach einem der Ansprüche 1 bis 4, wobei die Vorrichtung (100) ferner umfasst: einen zweiten Trägerabschnitt (140), der unterhalb des Antriebsabschnitts (110) angeordnet ist und dazu verwendet wird, zu einer Position angehoben zu werden, in der die Höhe der Oberseite (141) des zweiten Trägerabschnitts (140) gleich derjenigen der Oberseite (121) des ersten Trägerabschnitts (120) ist, nachdem N Polbleche (200) der Elektrodenanordnung auf dem ersten Trägerabschnitt (120) gestapelt sind, und die N Polbleche (200) von dem ersten Trägerabschnitt (120) aufzunehmen, wobei N kleiner als M ist, M die Gesamtanzahl der in der Elektrodenanordnung enthaltenen Polbleche (200) ist und M und N positive ganze Zahlen größer als 1 sind.

**6.** Vorrichtung (100) nach Anspruch 5, wobei jedes Mal, wenn der Antriebsabschnitt (110) das Polblech (200) mit einer Länge W antreibt, der zweite Trägerabschnitt (140) um einen Abstand S nach unten bewegt wird, um den Abstand zwischen der Oberfläche der auf dem zweiten Trägerabschnitt (140) gestapelten Polbleche (200) und dem Antriebsabschnitt (110) auf dem vorgegebenen Wert zu halten.

**7.** Vorrichtung (100) nach Anspruch 6, wobei die Vorrichtung (100) ferner umfasst: ein Schneidmesser (170), das oberhalb des Antriebsabschnitts (110) angeordnet ist und dazu verwendet wird, die Polbleche (200) abzutrennen, wenn die Länge der von dem Antriebsabschnitt (110) angetriebenen Polbleche (200) M×W erreicht.

**8.** Vorrichtung (100) nach einem der Ansprüche 1 bis 7, wobei die Vorrichtung (100) ferner umfasst: einen Aufnahmeabschnitt (150), der zwischen dem Antriebsabschnitt (110) und dem ersten Trägerabschnitt (120) angeordnet ist, wobei der Aufnahmeabschnitt (150) eine erste Leitplatte (151) und eine zweite Leitplatte (152) umfasst, die voneinander beabstandet sind und einen Hohlraum zum Aufnehmen der Polbleche (200) bilden.

**9.** Vorrichtung (100) nach einem der Ansprüche 1 bis 8, wobei die Polbleche (200) Pluspolbleche (210) und Minuspolbleche (220) umfassen und die Minuspolbleche (220) abwechselnd auf beiden Seiten der Pluspolbleche (210) angeordnet sind.

**10.** Vorrichtung (100) nach Anspruch 9, wobei die Polbleche (200) ferner erste Separatoren (230) und zweite Separatoren (240) umfassen und die ersten Separatoren (230) und die zweiten Separatoren (240) jeweils auf beiden Seiten der Pluspolbleche (210) angeordnet sind, um die Pluspolbleche (210) von den Minuspolblechen (220) zu trennen.

**11.** Vorrichtung (100) nach Anspruch 9 oder 10, wobei die Pluspolbleche (210) von zwei benachbarten Polblechen (200) der Elektrodenanordnung voneinander getrennt sind oder zwischen den Pluspolblechen (210) der zwei benachbarten Polbleche (200) Sollbruchstellen ausgebildet sind.

**12.** Vorrichtung (100) nach einem der Ansprüche 1 bis 11, wobei die Vorrichtung (100) ferner umfasst: einen Blasabschnitt (130), der zwischen dem Antriebsabschnitt (110) und dem ersten Trägerabschnitt (120) angeordnet ist und dazu verwendet wird, Luft auf das erste Polblech zu blasen, nachdem das erste Polblech aus dem Antriebsabschnitt (110) herabgefallen ist, sodass das erste Polblech auf der Oberseite des ersten Trägerabschnitts (120) gestapelt wird.

**13.** Vorrichtung (100) nach Anspruch 12, wobei der Blasabschnitt (130) einen ersten Blasmechanismus (131) und einen zweiten Blasmechanismus (132) umfasst, wobei der erste Blasmechanismus (131) und der zweite Blasmechanismus (132) jeweils auf beiden Seiten der herabfallenden Polbleche (200) angeordnet sind;

der erste Blasmechanismus (131) dazu verwendet wird, Luft auf das erste Polblech zu blasen, wenn die Seite des ersten Polblechs, auf der sich das Minuspolblech (220) befindet, dem zweiten Blasmechanismus (132) zugewandt ist; und der zweite Blasmechanismus (132) dazu verwendet wird, Luft auf das erste Polblech zu blasen, wenn die Seite des ersten Polblechs, auf der sich das Minuspolblech (220) befindet, dem ersten Blasmechanismus (131) zugewandt ist.

14. Verfahren (400) zur Herstellung einer Elektrodenanordnung, wobei das Verfahren (400) auf eine Vorrichtung (100) zur Herstellung einer Elektrodenanordnung nach einem der Ansprüche 1 bis 13 angewendet wird und das Verfahren (400) umfasst:

den Schritt (410) des Antreibens von Polblechen (200) durch den Antriebsabschnitt (110), um die Polbleche (200) aus dem Antriebsabschnitt (110) herabfallen zu lassen; und den Schritt (420) des Steuerns des Abstands (H1) zwischen einer Anfangsposition der Oberseite (121) des ersten Trägerabschnitts (120) und dem Antriebsabschnitt (110) auf den vorgegebenen Wert und des Aufnehmens der aus dem Antriebsabschnitt (110) herabfallenden Polbleche (200) durch den ersten Trägerabschnitt (120), sodass die Polbleche (200) auf dem ersten Trägerabschnitt (120) gestapelt werden.

## Revendications

1. Appareil (100) pour la fabrication d'un ensemble électrode, l'appareil (100) comprenant :

une partie d'entraînement (110), destinée à entraîner des pièces polaires (200) de façon à faire tomber les pièces polaires (200) de la partie d'entraînement (110) ; et une première partie de support (120), placée sous la partie d'entraînement (110), et destinée à recevoir les pièces polaires (200) tombant de la partie d'entraînement (110), de sorte que les pièces polaires (200) soient empilées sur la première partie de support (120), la distance (H1) entre une position initiale de la surface supérieure (121) de la première partie de support (120) et la partie d'entraînement (110) étant une valeur prédéfinie, la valeur prédéfinie étant comprise dans une plage de W à 2W, la position initiale étant la position de la surface supérieure de la première partie de support (120) lorsqu'elle reçoit la première pièce polaire de l'ensemble électrode, et W étant la longueur de chaque pièce polaire (200) de l'ensemble électrode ; W étant comprise entre 100 mm et 200 mm ; **caractérisé en ce que** l'appareil (100) comprend en outre : un mécanisme d'aplanissement (160), destiné à frapper légèrement l'ensemble électrode afin d'aplanir la surface de l'ensemble électrode une fois que la dernière pièce polaire (200) de l'ensemble électrode a été placée sur l'empilement.

2. Appareil (100) selon la revendication 1, dans lequel la valeur prédéfinie est comprise dans une plage allant de W à $(1+\sqrt{3}/2)W$.

3. Appareil (100) selon la revendication 2, dans lequel la valeur prédéfinie est de 1,5W.

4. Appareil (100) selon l'une quelconque des revendications 1 à 3, dans lequel la partie d'entraînement (110) comprend un cylindre d'entraînement (111) et un cylindre entraîné (112) disposés en regard l'un de l'autre de façon à permettre aux pièces polaires (200) de tomber entre le cylindre d'entraînement (111) et le cylindre entraîné (112), et la distance (H1) entre la position initiale et la partie d'entraînement (110) est la distance (H1) entre la position initiale et le centre du cylindre d'entraînement (111) ; et/ou dans lequel, chaque fois que la partie d'entraînement (110) entraîne la pièce polaire (200) d'une longueur W, la première partie de support (120) descend d'une distance S afin de maintenir la distance entre la surface des pièces polaires (200) empilées sur la première partie de support (120) et la partie d'entraînement (110) à la valeur prédéfinie, et S est l'épaisseur de chaque pièce polaire (200).

5. Appareil (100) selon l'une quelconque des revendications 1 à 4, l'appareil (100) comprenant en outre : une seconde partie de support (140), placée sous la partie d'entraînement (110), et destinée à s'élever jusqu'à une position à laquelle la hauteur de la surface supérieure (141) de la seconde partie de support (140) est la même que celle de la surface supérieure (121) de la première partie de support (120) une fois que N pièces polaires (200) de l'ensemble électrode sont empilées sur la première partie de support (120), et recevoir les N pièces polaires (200) de la première partie de support (120), N étant inférieur à M, M étant le nombre total de pièces polaires (200) dans l'ensemble électrode, et M et N étant des entiers positifs supérieurs à 1.

6. Appareil (100) selon la revendication 5, dans lequel chaque fois que la partie d'entraînement (110) entraîne la pièce polaire (200) d'une longueur W, la seconde partie de support (140) descend d'une distance S afin de maintenir la distance entre la surface des pièces polaires (200) empilées sur la seconde partie de support (140) et la partie d'entraînement (110) à la valeur prédéfinie.

7. Appareil (100) selon la revendication 6, l'appareil (100) comprenant en outre :

une lame de coupe (170), placée au-dessus de la partie d'entraînement (110), et destinée à couper les pièces polaires (200) lorsque la longueur des pièces polaires (200) entraînées par la partie d'entraînement (110) atteint M×W.

8. Appareil (100) selon l'une quelconque des revendications 1 à 7, l'appareil (100) comprenant en outre : une partie de réception (150), placée entre la partie d'entraînement (110) et la première partie de support (120), la partie de réception (150) comprenant un premier panneau (151) et un second panneau (152) qui sont mutuellement espacés et forment une cavité destinée à recevoir les pièces polaires (200).

9. Appareil (100) selon l'une quelconque des revendications 1 à 8, dans lequel les pièces polaires (200) comprennent des pièces polaires positives (210) et des pièces polaires négatives (220), et les pièces polaires négatives (220) sont placées en alternance sur les deux côtés des pièces polaires positives (210).

10. Appareil (100) selon la revendication 9, dans lequel les pièces polaires (200) comprennent, en outre, des premiers séparateurs (230) et des seconds séparateurs (240), et les premiers séparateurs (230) et les seconds séparateurs (240) sont respectivement placés sur les deux côtés des pièces polaires positives (210) pour séparer les pièces polaires positives (210) des pièces polaires négatives (220).

11. Appareil (100) selon la revendication 9 ou 10, dans lequel les pièces polaires positives (210) de deux pièces polaires (200) adjacentes de l'ensemble électrode sont séparées, ou des rainures sont formées entre les pièces polaires positives (210) des deux pièces polaires (200) adjacentes.

12. Appareil (100) selon l'une quelconque des revendications 1 à 11, l'appareil (100) comprenant en outre : une partie de soufflage (130), placée entre la partie d'entraînement (110) et la première partie de support (120), et destinée à souffler de l'air sur la première pièce polaire une fois que la première pièce polaire est tombée de la partie d'entraînement (110), de telle sorte que la première pièce polaire soit empilée sur la surface supérieure de la première partie de support (120).

13. Appareil (100) selon la revendication 12, dans lequel la partie de soufflage (130) comprend un premier mécanisme de soufflage (131) et un second mécanisme de soufflage (132), le premier mécanisme de soufflage (131) et le second mécanisme de soufflage (132) étant respectivement placés sur les deux côtés des pièces polaires (200) qui tombent ;

le premier mécanisme de soufflage (131) est destiné à souffler de l'air sur la première pièce polaire lorsque le côté de la première pièce polaire sur lequel se trouve la pièce polaire négative (220) fait face au second mécanisme de soufflage (132) ; et
le second mécanisme de soufflage (132) est destiné à souffler de l'air sur la première pièce polaire lorsque le côté de la première pièce polaire sur lequel se trouve la pièce polaire négative (220) fait face au premier mécanisme de soufflage (131).

14. Procédé (400) pour la fabrication d'un ensemble électrode, le procédé (400) étant appliqué à un appareil (100) pour la fabrication d'un ensemble électrode selon l'une quelconque des revendications 1 à 13, et le procédé (400) comprenant :

l'étape (410) consistant à entraîner des pièces polaires (200) par le biais de la partie d'entraînement (110) de façon à faire tomber les pièces polaires (200) de la partie d'entraînement (110) ; et
l'étape (420) consistant à réguler la distance (H1) entre la position initiale de la surface supérieure (121) de la première partie de support (120) et la partie d'entraînement (110) à la valeur prédéfinie, et recevoir les pièces polaires (200) tombant de la partie d'entraînement (110), au moyen de la première partie de support (120), de sorte que les pièces polaires (200) soient empilées sur la première partie de support (120).

**FIG. 1**

**FIG. 2**

**FIG. 3**

400

```
┌─────────────────────────────────────────────────────────┐
│                                                         │   410
│     Drive pole pieces by a driving roller to fall       │
│     the pole pieces from a driving portion              │
│                                                         │
└─────────────────────────────────────────────────────────┘
                            │
┌─────────────────────────────────────────────────────────┐
│   Control the distance between an initial position of   │
│   the upper surface of a first support portion and the  │
│   driving portion to be a preset value, and receive     │   420
│   the pole pieces falling from the driving portion by   │
│   the first support portion, so that the pole pieces    │
│   are stacked on the first support portion, the preset  │
│   value being in a range of W to 2W, and the initial    │
│   position being the position of the upper surface of   │
│   the first support portion when receiving the first    │
│   pole piece of an electrode assembly                   │
└─────────────────────────────────────────────────────────┘
```

# FIG. 4

```
                        ┌─────────────────┐
                        │      Start      │
                        └─────────────────┘
                                 │
                                 ▼
          ┌──────────────────────────────────────────┐
          │  Control a driving portion to drive pole  │────  501
          │                  pieces                   │
          └──────────────────────────────────────────┘
                                 │
                                 ▼
          ┌──────────────────────────────────────────┐
          │ Control a blowing portion to blow air to  │────  502
          │ the first pole piece, and control a first │
          │   support portion to arrive at an initial │
          │                 position                  │
          └──────────────────────────────────────────┘
                                 │
                                 ▼
   503   ┌──────────────────────────────────────────┐
    ──── │ Every time a driving roller is controlled │
         │ to drive a pole piece with a length W,    │              N
         │ control the first support portion to      │─────────────┐
         │ descend by a distance S                   │             │
         └──────────────────────────────────────────┘             │
                                 │                                 │
   504                           ▼                                 │
    ──      ╱────────────────────────────────────────╲            │
           ╱              Whether N                    ╲───────────┘
           ╲         pole pieces have been            ╱
            ╲              stacked?                   ╱
             ╲────────────────────────────────────╱
                                 │ Y
                                 ▼
          ┌──────────────────────────────────────────┐
          │ Control a second support portion to rise  │────  505
          │   to the position of the first support    │
          │                 portion                   │
          └──────────────────────────────────────────┘
                                 │
                                 ▼
          ┌──────────────────────────────────────────┐
          │  Control the first support portion to     │────  506
          │                move out                   │
          └──────────────────────────────────────────┘
                                 │
                                 ▼
   507   ┌──────────────────────────────────────────┐
    ──── │ Every time the driving roller is          │
         │ controlled to drive a pole piece with a   │              N
         │ length W, control the second support      │─────────────┐
         │ portion to descend by a distance S        │             │
         └──────────────────────────────────────────┘             │
                                 │                                 │
   508                           ▼                                 │
    ──      ╱────────────────────────────────────────╲            │
           ╱            Whether the                    ╲───────────┘
           ╲     length of the driven pole pieces     ╱
            ╲            reaches W×M?                 ╱
             ╲────────────────────────────────────╱
                                 │ Y
                                 ▼
          ┌──────────────────────────────────────────┐
          │ Control a cutting knife to cut off the    │────  509
          │              pole pieces                  │
          └──────────────────────────────────────────┘
                                 │
                                 ▼
           ╱────────────────────────────────────────╲
          ╱            Whether the tail               ╲──  510
          ╲   part of the pole pieces is detached     ╱
           ╲     from the driving roller?            ╱
            ╲────────────────────────────────────╱
                                 │
                                 ▼
          ┌──────────────────────────────────────────┐
          │ Control the second support portion to     │── 511
          │                move out                   │
          └──────────────────────────────────────────┘
                                 │
                                 ▼
          ┌──────────────────────────────────────────┐
          │ Control a flattening mechanism to flatten │── 552
          │ the last pole piece of an electrode       │
          │                assembly                   │
          └──────────────────────────────────────────┘
                                 │
                                 ▼
                        ┌─────────────────┐
                        │       End       │── 553
                        └─────────────────┘
```

**FIG. 5**

The first pole piece arrives at a blowing portion — 601

Whether a negative pole piece of the first pole piece is on the right side? — 602

N →

Blow air to the first pole piece by a second blowing mechanism — 604

Y

Blow air to the first pole piece by a first blowing mechanism — 603

Control a first support portion to move to the initial position thereof — 605

Whether the tail part of the first pole piece arrives at the blowing portion? — 606

Y

Control the blowing portion to stop blowing — 607

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 213459845 U